# EUROPÄISCHE PATENTSCHRIFT

(11) **EP 1 558 479 B1**
(45) Veröffentlichungstag und Bekanntmachung des Hinweises auf die Patenterteilung: **17.05.2006**
(21) Anmeldenummer: 03810395.8
(22) Anmeldetag: 19.09.2003
(51) Int. Cl.: B62D 1/18

(54) **KRAFTFAHRZEUGLENKSÄULE**
MOTOR VEHICLE STEERING COLUMN
COLONNE DE DIRECTION DE VEHICULE AUTOMOBILE

(30) Priorität: 07.11.2002 DE 10251764
(43) Veröffentlichungstag der Anmeldung: 03.08.2005
(73) Patentinhaber: DaimlerChrysler AG, 70567 Stuttgart (DE)
(72) Erfinder: BORN, Christian, 22589 Hamburg (DE); KNOLL, Karl-Heinz, 71384 Weinstadt (DE); MAUSOLF, Karsten, 29614 Soltau (DE); RAABE, Hermann, 70794 Filderstadt (DE); SCHULIERS, Wolfgang, 21244 Buchholz (DE)
(86) Internationale Anmeldenummer: PCT/EP2003/010458
(87) Internationale Veröffentlichungsnummer: WO 2004/041619

(56) Entgegenhaltungen:
- EP-A- 0 599 073
- EP-A- 1 253 060
- DE-A- 3 634 977
- DE-A- 19 641 152
- US-A1- 2002 020 245
- US-A1- 2002 024 208

## Beschreibung

Die Erfindung betrifft eine Kraftfahrzeuglenksäule mit einer fahrzeugfesten Konsole und einem Mantelrohr nach dem Oberbegriff des Patentanspruchs 1.

Aus der DE 196 41 152 A1 ist eine Kraftfahrzeuglenksäule bekannt, bei der ein Mantelrohr über eine Verstellvorrichtung relativ zu einer fahrzeugfesten Konsole neigungsverstellbar ist. Die Verstellvorrichtung umfasst einen schwenkbar an der Konsole gelagerten Hebel, der durch eine Antriebseinrichtung -hier einen Elektromotor- um eine Schwenkachse auslenkbar ist. Die Antriebseinrichtung treibt eine Getriebespindel an, auf der eine Spindelmutter sitzt. Der Vortrieb der Spindelmutter bewirkt eine Auslenkung des Hebels um eine Schwenkachse an der Konsole, so dass das mit dem Hebel verbundene Mantelrohr nach oben oder unten mitgenommen wird.

Diese Lösung hat den Nachteil, dass für größere Verstellwege die Hebellänge entsprechend vergrößert werden muss. Gerade im Cockpitbereich steht jedoch nicht beliebig Bauraum zur Verfügung.

DE3634977 A wird als nächstliegender Stand der Technik gegenüber dem Gegenstand des Anspruchs 1 angesehen. Es offenbart eine Kraftfahrzeuglenksäule mit einer fahrzeugfesten Konsole und einem Mantelrohr, das über eine Verstellvorrichtung relativ zu der fahrzeugfesten Konsole neigungsverstellbar ist, wobei die Verstellvorrichtung einen schwenkbar an der Konsole gelagerten Hebel umfaßt, der durch eine Antriebseinrichtung um eine Schwenkachse auslenkbar ist und an dessen einem Abtriebsende ein Umlenkbügel angelenkt ist, der schwenkbeweglich mit dem Mantelrohr verbunden ist.

Es ist daher Aufgabe der Erfindung eine Kraftfahrzeuglenksäule zur Verfügung zu stellen, die unabhängig von dem zur Verfügung stehenden Bauraum eine maximale Neigungseinstellung erlaubt.

Diese Aufgabe wird erfindungsgemäß mit den Merkmalen des Patentanspruchs 1 gelöst.

Erfindungsgemäß wird eine Verstellvorrichtung für die Neigungseinstellung eines Mantelrohrs vorgesehen, die einen schwenkbar an einer fahrzeugfesten Konsole gelagerten Hebel umfasst, an dessen Abtriebsende ein Umlenkbügel angelenkt ist. Der Umlenkbügel ist schwenkbeweglich mit dem Mantelrohr verbunden, so dass bei Auslenkung des Hebels der Umlenkbügel und somit das Mantelrohr mitgenommen wird. Das Übersetzungsverhältnis zwischen Hebel und Umlenkbügel ist derart gestaltet, dass eine kleine Auslenkung des Hebels einen großen Verstellweg des Umlenkbügels bewirkt. Je nach Anordnung der Schwenkachse des Hebels und des Umlenkbügels kann der Verstellweg der Lenksäule frei gewählt werden, ohne einen erhöhten Bauraumbedarf zu haben.

Vorteilhafte Ausgestaltungen ergeben sich aus den Unteransprüchen.

In einer bevorzugten Ausführungsform kann das Mantelrohr an einer sich quer zur Längsachse der Kraftfahrzeuglenksäule erstreckenden Schwenkachse bewegbar an der Konsole gelagert sein. Diese Schwenkachse bildet den Drehpunkt der Kraftfahrzeuglenksäule bei der Neigungseinstellung. Das heißt, je weiter entfernt die Schwenkachse vom Lenkrad angeordnet ist, kann mittels kleiner Verstellwege der Verstellvorrichtung größere Verstellwege für das Lenkrad erreicht werden.

Das Mantelrohr kann neben einer Neigungseinstellung auch längeneinstellbar gehalten sein. Dazu sind zwei ineinander verschiebbare Mantelrohrabschnitte vorgesehen, wobei unterhalb der Längsachse der Kraftfahrzeuglenksäule ein Flansch am äußeren Mantelrohrabschnitt angeformt ist. Der angeformte Flansch wird von einer Schwenkachse des Umlenkbügels durchsetzt. In Abhängigkeit von der Lage der Schwenkachse kann der Verstellweg bei der Neigungseinstellung bestimmt werden. Je näher sich die Schwenkachse des Umlenkbügels an der fahrzeugfesten Schwenkachse des Hebels befindet, desto größere Verstellwege sind möglich.

Der Umlenkbügel kann eine im wesentlichen u-förmige Gestalt aufweisen und um den äußeren Mantelrohrabschnitt unterhalb herumgeführt sein. Die freien Schenkelenden des Umlenkbügels können an dem Abtriebsende des Hebels angelenkt sein. Dadurch kann die Steifigkeit des gesamten Systems verbessert werden.

Der Hebel kann eine im wesentlichen dreieckige Längsschnittform aufweisen, so dass das Antriebsende durch eine Spitze des Dreiecks und das Abtriebsende durch eine andere Spitze des Dreiecks gebildet werden. Die Schenkellängen des dreieckförmigen Hebels bestimmen die Hebelverhältnisse der Verstellvorrichtung.

Der Hebel kann bezüglich der Längsachse der Kraftfahrzeuglenksäule spiegelsymmetrisch gestaltet sein, so dass eine präzise Höheneinstellung ohne seitlichen Versatz möglich ist.

Anhand der Zeichnung werden im folgenden zwei Ausführungsformen erläutert. Dabei zeigen:
- Fig. 1: eine Kraftfahrzeuglenksäule in einer ersten Ausführungsform in einer perspektivischen Ansicht,
- Fig. 2: die Kraftfahrzeuglenksäule gemäß Fig. 1 in einer Ansicht von der Seite sowie
- Fig. 3: eine Kraftfahrzeuglenksäule in einer zweiten Ausführungsform.

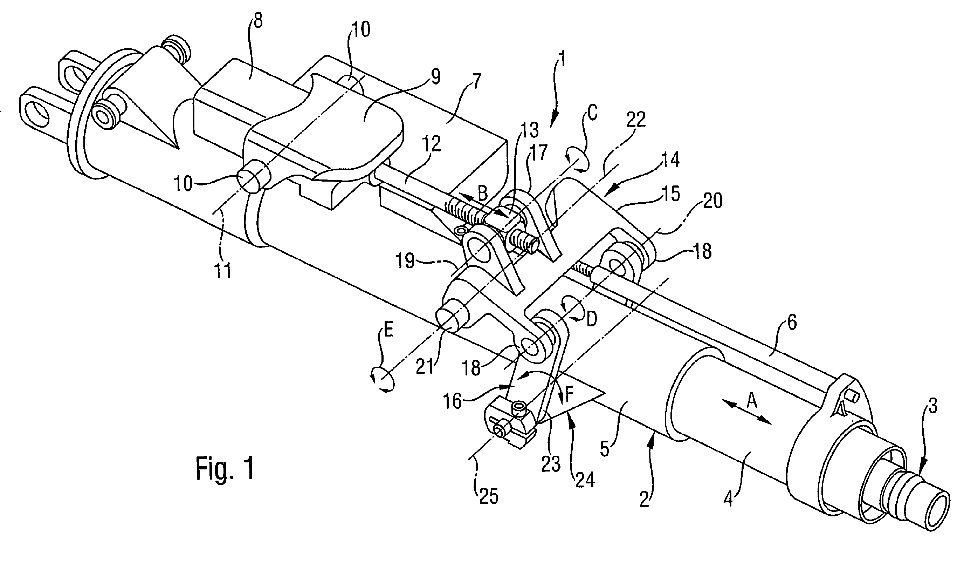

In Fig. 1 ist eine Kraftfahrzeuglenksäule 1 mit einem zweigeteilten, teleskopierbaren Mantelrohr 2 dargestellt, in dem eine Lenkspindel 3 drehbar gelagert ist. Das Mantelrohr 2 ist mit einer fahrzeugfesten, nicht dargestellten Konsole verbunden.

Das Mantelrohr 2 ist aus einem inneren Mantelrohrabschnitt 4 und einem äußeren Mantelrohrabschnitt 5 zusammengesetzt. Der innere Mantelrohrabschnitt 4 ist mit einer Gewindespindel 6 verbunden, die von einem Elektromotor 7 angetrieben wird. Je nach Drehrichtung der Gewindespindel 6 wird der innere Mantelrohrabschnitt 4 in den äußeren Mantelrohrabschnitt 5 gemäß Pfeilrichtung A hinein- oder hinaus bewegt, so dass eine Komforteinstellung der Kraftfahrzeuglenksäule 1 in Längsrichtung gegeben ist.

Auf dem äußeren Mantelrohrabschnitt 5 ist ein zweiter Elektromotor 8 an einer Halterung 9 befestigt. Die Halterung 9 weist außenseitig zwei Achsstummel 10 auf, die zusammen eine Schwenkachse 11 bilden. Die Achsstummel 10 sind in Aufnahmen der Konsole schwenkbar gelagert.

Von dem Elektromotor 8 wird eine zweite Gewindespindel 12 angetrieben, so dass -je nach Drehrichtung der Gewindespindel 12- eine auf der Gewindespindel 12 sitzende Spindelmutter 13 gemäß Pfeilrichtung B hin- und herbewegt wird.

Die Spindelmutter 13 gehört zu einer Verstellvorrichtung 14, über die das Mantelrohr 2 relativ zur fahrzeugfesten Konsole neigungsverstellbar gehalten ist.

Die Verstellvorrichtung 14 umfasst einen Hebel 15 und einen Umlenkbügel 16. Der Hebel 15 weist ein Antriebsende 17 und ein Abtriebsende 18 auf.

Das Antriebsende 17 ist schwenkbeweglich an der Spindelmutter 13 befestigt, so dass der Hebel 15 eine Schwenkbewegung gemäß Pfeilrichtung C um eine Schwenkachse 19 ausführen kann. Von dem Antriebsende 17 erstreckt sich der Hebel 15 winkelförmig zu dem Abtriebsende 18, an dem über eine Schwenkachse 20 der Umlenkbügel 16 angelenkt ist, so dass der Umlenkbügel 16 gemäß Pfeilrichtung D um die Schwenkachse 20 bewegbar ist.

Der Hebel 15 ist mit Lagerzapfen 21 versehen, die in korrespondierenden Aufnahmen der Konsole gelagert sind und somit eine Schwenkachse 22 bilden, um die der Hebel 15 gemäß Pfeilrichtung E verschwenkt werden kann.

Der am Abtriebsende 18 des Hebels 15 angelenkte Umlenkbügel 16 ist an seinem der Schwenkachse 20 gegenüberliegenden Ende 23 schwenkbar an einem Flansch 24 des äußeren Mantelrohrabschnitts 5 gelagert, so dass eine Bewegung des Umlenkbügels 16 um eine Schwenkachse 25 gemäß Pfeilrichtung F möglich ist.

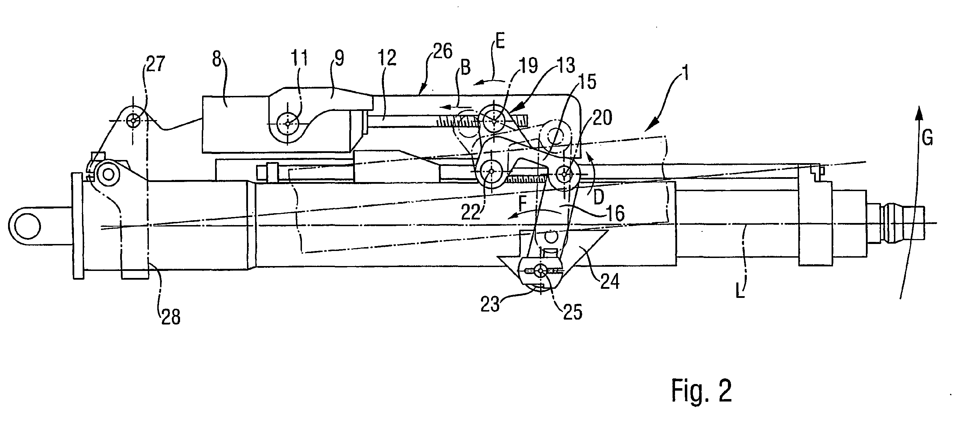

In Fig. 2 ist die in Fig. 1 perspektivisch dargestellte Kraftfahrzeuglenksäule 1 in einer Ansicht von der Seite dargestellt. Zusätzlich zu der Kraftfahrzeuglenksäule 1 ist eine fahrzeugfeste Konsole 26 angedeutet.

An der Konsole 26 ist die Kraftfahrzeuglenksäule 1 über eine schematisch dargestellte Schelle 28 derart gelagert, das sich die Kraftfahrzeugsäule 1 auf einer Kreisbahn gemäß Pfeilrichtung G um eine sich quer zur Längsachse L der Kraftfahrzeuglenksäule 1 erstreckende Schwenkachse 27 bewegen kann. Die Bewegung der Kraftfahrzeuglenksäule 1 entlang der Pfeilrichtung G wird mittels der Verstellvorrichtung 14 realisiert und bietet dem Insassen die Möglichkeit eine Neigungseinstellung des Lenkrades vorzunehmen.

Die Neigungsverstellung mittels Verstellvorrichtung 14 erfolgt folgendermaßen:

Ausgehend von der in Fig. 2 mit durchgezogener Linie gekennzeichneten Lage der Kraftfahrzeuglenksäule 1 wird der Elektromotor 8 durch den Fahrer aktiviert, so dass sich die Gewindespindel 12 dreht. Dadurch wird die auf der Gewindespindel 12 sitzende Spindelmutter 13 in Pfeilrichtung B in die gestrichelt dargestellte Position bewegt und somit der Hebel 15 um seine Schwenkachse 22 gemäß Pfeilrichtung E ausgelenkt. Das Abtriebsende 18 des Hebels 15 nimmt bei seiner Bewegung den Umlenkbügel 16 mit, so dass dieser sich um die Schwenkachse 25 gemäß Pfeilrichtung F verdreht und dabei die Kraftfahrzeuglenksäule 1 nach oben in Pfeilrichtung G bewegt. Diese Bewegung erfolgt auf einer Kreisbahn um die Schwenkachse 27 der Kraftfahrzeuglenksäule 1.

Bei einer gegenläufigen Bewegung der Spindelmutter 13 laufen die Bewegungen der Verstellvorrichtung 14 entsprechend umgekehrt.

Die auf einer Kreisbahn um die Schwenkachse 22 verlaufende Bewegung der Spindelmutter 13 wird durch die schwenkbare Lagerung von Elektromotor 8 bzw. Halterung.9 ausgeglichen, die eine Schwenkbewegung der Gewindespindel 12 um die Schwenkachse 11 ermöglicht. Dieser Ausgleich kann jedoch auch mit einer Kulissenführung oder einer flexiblen Gewindespindel erreicht werden.

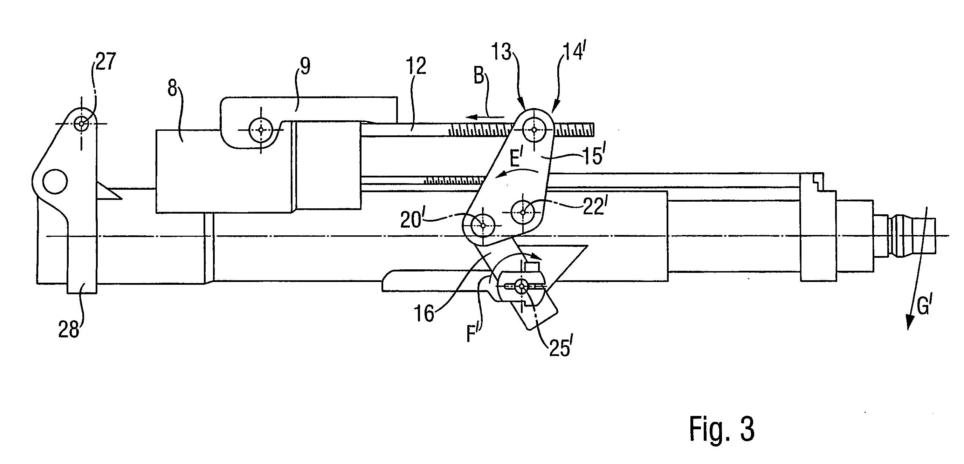

Fig. 3 zeigt eine zweite Ausführungsform der Erfindung, wobei die gleichen Bezugszeichen wie in Fig. 1 und 2 verwendet werden. Bauteile, die sich von der Ausführung nach Fig. 1 und 2 unterscheiden werden apostrophiert.
Bei der zweiten Ausführungsform der Erfindung gemäß Fig. 3 umfasst die Verstellvorrichtung 14' einen Hebel 15', dessen Schwenkachse 22' im Unterschied zu der Ausführungsform nach Fig. 1 und 2 in Richtung des Lenkrades vorverlagert ist. Das hat unter anderem den Vorteil, dass bei einem Crash die in die Lenksäule eingeleiteten Kräfte eine Zugbeanspruchung in der Gewindespindel 12 bewirken.

Die Neigungseinstellung mittels der Verstellvorrichtung 14' erfolgt folgendermaßen:

Die Gewindespindel 12 wird durch den Elektromotor 8 angetrieben, so dass sich die Spindelmutter 13 gemäß Pfeilrichtung B auf der Gewindespindel 12 bewegt. Der Hebel 15' wird um die Schwenkachse 22' gemäß Pfeil E' ausgelenkt, wodurch die Schwenkachse 20' entsprechend nach unten verlagert wird. Der Umlenkbügel 16 wird gemäß Pfeilrichtung F' um die Schwenkachse 25' verschwenkt, so dass sich die Kraftfahrzeuglenksäule 1 nach unten gemäß Pfeilrichtung G' um die Schwenkachse 27 auf einer Kreisbahn bewegt.

Bei einer Bewegung der Spindelmutter 13 in die entgegengesetzte Richtung erfolgt der Bewegungsablauf der Verstellvorrichtung 14' in umgekehrter Richtung.

Auch bei dieser Ausführungsform kann die Bewegung der Spindelmutter 13 durch die schwenkbare Lagerung des Elektromotors 8 bzw. der Halterung 9 ausgeglichen werden.

## Patentansprüche

1. Kraftfahrzeuglenksäule mit einer fahrzeugfesten Konsole (26) und einem Mantelrohr (2), das über eine Verstellvorrichtung relativ zu der fahrzeugfesten Konsole (26) neigungsverstellbar ist, wobei die Verstellvorrichtung (14, 14') einen schwenkbar an der Konsole gelagerten Hebel (15, 15') umfasst, der durch eine Antriebseinrichtung um eine Schwenkachse (22, 22') auslenkbar ist und an dessen einem Abtriebsende (18, 18')ein Umlenkbügel (16, 16') angelenkt ist, der schwenkbeweglich mit dem Mantelrohr (2) verbunden ist,
**dadurch gekennzeichnet,**
**dass** der Hebel (15, 15') durch eine Hin- und Herbewegung an einem Antriebsende (17) um seine Schwenkachse (22) auslenkbar ist, wobei ein Ausgleich zwischen der Bewegung des Antriebsendes (17) und der Antriebseinrichtung (8, 9) vorgesehen ist.

2. Kraftfahrzeuglenksäule nach Anspruch 1,
**dadurch gekennzeichnet,**
**dass** das Mantelrohr (2) um eine sich quer zur Längsachse (L) der Kraftfahrzeuglenksäule (1) erstreckende Schwenkachse (27) bewegbar an der Konsole (26) gelagert ist.

3. Kraftfahrzeuglenksäule nach Anspruch 1,
**dadurch gekennzeichnet,**
**dass** das Mantelrohr (2)zwei Mantelrohrabschnitte (4, 5) aufweist, wobei unterhalb der Längsachse (L) ein Flansch (24) an dem äußeren Mantelrohrabschnitt (5) angeformt ist, an dem eine Schwenkachse (25, 25') des Umlenkbügels (16, 16') angeordnet ist.

4. Kraftfahrzeuglenksäule nach Anspruch 1,
**dadurch gekennzeichnet,**
**dass** der Umlenkbügel (16, 16') eine u-förmige Gestalt aufweist, wobei ein freies Schenkelende des Umlenkbügels (16, 16') an dem Abtriebsende (18, 18') des Hebels (15,15') angelenkt ist.

5. Kraftfahrzeuglenksäule nach Anspruch 1,
**dadurch gekennzeichnet,**
**dass** der Hebel (15, 15') eine im wesentlichen dreieckige Längsschnittform aufweist.

6. Kraftfahrzeuglenksäule nach Anspruch 1,
**dadurch gekennzeichnet,**
**dass** der Hebel (15, 15') bezüglich der Längsachse (L) der Kraftfahrzeuglenksäule (1) spiegelsymmetrisch angeordnet ist.

## Claims

1. Motor vehicle steering column with a bracket (26) fixed to the vehicle and a steering column tube (2) which can be adjusted in inclination relative to the bracket (26) fixed to the vehicle via an adjusting device, the adjusting device (14, 14') comprising a lever (15, 15') which is mounted pivotably on the bracket and can be deflected about a pivot axis (22, 22') by means of a driving device and to the one output end (18, 18') of which is coupled a deflecting clamp (16, 16') which is connected pivotably to the steering column tube (2), **characterized in that** the lever (15, 15') can be deflected about its pivot axis (22) by means of a reciprocating movement at one driving end (17), with an equalization between the movement of the driving end (17) and the driving device (8, 9) being provided.

2. Motor vehicle steering column according to Claim 1, **characterized in that** the steering column tube (2) is mounted on the bracket (26) in a manner such that it can move about a pivot axis (27) extending transversely with respect to the longitudinal axis (L) of the motor vehicle steering column (1).

3. Motor vehicle steering column according to Claim 1, **characterized in that** the steering column tube (2) has two steering column tube sections (4, 5), with, below the longitudinal axis (L), a flange (24) being integrally formed on the outer steering column tube section (5) and on which a pivot axis (25, 25') of the deflecting clamp (16, 16') is arranged.

4. Motor vehicle steering column according to Claim 1, **characterized in that** the deflecting clamp (16, 16') has a U-shaped design, with a free limb end of the deflecting clamp (16, 16') being coupled to the output end (18, 18') of the lever (15, 15').

5. Motor vehicle steering column according to Claim 1, **characterized in that** the lever (15, 15') has an essentially triangular longitudinal section form.

6. Motor vehicle steering column according to Claim 1, **characterized in that** the lever (15, 15') is arranged mirror-symmetrically with respect to the longitudinal axis (L) of the motor vehicle steering column (1).

## Revendications

1. Colonne de direction de véhicule avec une console (26) fixée au véhicule et un tube de protection (2) qui est réglable en inclinaison par rapport à la console (26) fixée au véhicule par l'intermédiaire d'un dispositif de réglage, le dispositif de réglage (14, 14') comportant un levier (15, 15') logé de manière pivotante dans la console, qui peut être orienté autour d'un axe de pivotement (22, 22') par l'intermédiaire d'un dispositif d'entraînement et à une extrémité de sortie (18, 18') duquel est articulé un étrier de renvoi (16, 16') qui est raccordé au tube de protection (2) de manière oscillante, **caractérisée en ce que** le levier (15, 15') peut être orienté autour de son axe de pivotement (22) par un mouvement de va et vient à une extrémité d'entraînement (17), un équilibrage étant prévu entre le mouvement de l'extrémité d'entraînement (17) et le dispositif d'entraînement (8, 9).

2. Colonne de direction de véhicule selon la revendication 1, **caractérisé en ce que** le tube de protection (2) est logé dans la console (26) de manière mobile autour d'un axe de pivotement (27) s'étendant perpendiculairement à l'axe longitudinal (L) de la colonne de direction de véhicule (1).

3. Colonne de direction de véhicule selon la revendication 1, **caractérisé en ce que** le tube de protection (2) comporte deux segments de tube de protection (4, 5), une bride (24) étant moulée, en dessous de l'axe longitudinal (L), au segment de tube de protection extérieur (5), sur laquelle est monté un axe de pivotement (25, 25') de l'étrier de renvoi (16, 16').

4. Colonne de direction de véhicule selon la revendication 1, **caractérisé en ce que** l'étrier de renvoi (16, 16') a une configuration en forme de U, une extrémité libre de montant de l'étrier de renvoi (16, 16') étant articulée à l'extrémité de sortie (18, 18') du levier (15, 15').

5. Colonne de direction de véhicule selon la revendication 1, **caractérisé en ce que** le levier (15, 15') présente une forme sensiblement triangulaire en section longitudinale.

6. Colonne de direction de véhicule selon la revendication 1, **caractérisé en ce que** le levier (15, 15') est disposé en symétrie inversée par rapport à l'axe longitudinal (L) de la colonne de direction de véhicule (1).
